# EUROPÄISCHE PATENTSCHRIFT

(11) **EP 0 441 237 B1**
(45) Veröffentlichungstag und Bekanntmachung des Hinweises auf die Patenterteilung: **14.09.1994**
(21) Anmeldenummer: 91101239.1
(22) Anmeldetag: 31.01.1991
(51) Int. Cl.: H04B 1/59, G08C 19/28

(54) **Tragbares feldprogrammierbares Detektierplättchen**
Portable detecting plate which is programmable by fields
Plaquette détectrice portative programmable par champs

(30) Priorität: 05.02.1990 DE 4003410
(43) Veröffentlichungstag der Anmeldung: 14.08.1991
(73) Patentinhaber: Stobbe, Anatoli, D-30890 Barsinghausen (DE)
(72) Erfinder: Stobbe, Anatoli, W-3013 Barsinghausen (DE); Herrmann, Wilfried, W-3007 Gehrden 5 (DE)
(74) Vertreter: Thömen, Uwe, Dipl.-Ing.

(56) Entgegenhaltungen:
- EP-A- 0 101 125
- EP-A- 0 268 902
- WO-A-89/05067
- GB-A- 2 098 431

## Beschreibung

### Tragbares feldprogrammierbares Detektierplättchen

Die Erfindung betrifft ein tragbares feldprogrammierbares Detektierplättchen gemäß dem Oberbegriff des Patentanspruchs 1.

In der heutigen Zeit, in der fast alle Produktionsprozesse automatisiert werden, sind elektronische Identifikationstechniken sehr gefragt, bei denen entweder nur eine Nummer gesendet wird (Read Only), oder bei denen sogar variable Daten enthalten sein können, die über einen Abstand programmierbar sind (Read/Write). Diese portablen Datenträger oder "Detektierplättchen" werden z. B. bei wertvollen Pferden unter die Haut gepflanzt, um diese immer sicher zu erkennen. Kühe und Schweine erhalten ein Implantat, um die automatische Fütterungsanlage zu steuern bzw. um alle Daten der Tiere von Geburt an zu speichern.

In der Produktionsautomation werden Detektierplättchen benutzt, indem damit Lackierstraßen bestückt werden, so daß die Fahrzeuge je nach Programmierung die entsprechende Farbe erhalten. Ein Roboter erhält über Flurfördersysteme eine bestimmte Sorte von Schrauben, die im Lager in einen Universal-Container gepackt und durch entsprechende Programmierung des Detektierplättchens an ihn versandt wurden.

Der Verbreitungsgrad solcher Techniken wird stark vom Preis des Datenträgers beeinflußt, denn dieser wird in großer Stückzahl benötigt.

Ein günstiger Preis, eine hohe Lebenserwartung und eine entsprechend kleine Bauform wird hauptsächlich mit batterielosen Detektierplättchen erreicht. Viele Anwendungen lassen sich mit einem "Read Only"-System durchführen, aber die Möglichkeit, den Dateninhalt des Detektierplättchens zu verändern, eröffnet jetzt - und für die Zukunft - viel größere Perspektiven. Mit dieser programmierbaren Variante befaßt sich die Erfindung. Grundsätzlich ist allen batterielosen Techniken Folgendes gemeinsam: Ein HF-Sender strahlt über eine Antenne ein elektromagnetisches Feld ab. Beim Eintritt in dieses Feld wird das Detektierplättchen mit Energie versorgt und beginnt, die gespeicherten Daten zu senden.

Ein Systemtakt für die Elektronik des Detektierplättchens wird häufig durch Teilung aus der Frequenz des HF-Feldes gewonnen. Dadurch wird der Datenspeicher ausgelesen und der serielle Datenstrom bewirkt durch eine spezielle Beschaltung eine feldsynchrone Bedämpfung des HF-Feldes. Diese Bedämpfung wird am Empfänger des HF-Senders ausgekoppelt, verstärkt und digital weiterverarbeitet. Im Gegenzug ist es bei Read/Write-Systemen möglich, den HF-Sender zu modulieren und so Daten zum Detektierplättchen über einen Abstand zu übertragen.

Gerade die Möglichkeit, den Speicherinhalt im Detektierplättchen nach der Verpackung in einem Gehäuse berührungslos verändern zu können, eröffnet dieser Technik viel mehr Einsatzgebiete als nur das reine Identifizieren. Es seien hier nur einige Gebiete angeführt, wie bargeldloser Zahlungsverkehr, Werkzeugmanagement, Fördersysteme, Fahrzeugdaten und natürlich auch persönliche Daten, für die ein umprogrammierbares Detektierplättchen eingesetzt werden kann.

Der Stand der Technik von kontaktlosen Programmiertechniken bei Detektierplättchen stellt sich wie folgt dar. Damit kontaktlos programmiert werden kann, enthalten die Detektierplättchen mehrere Spulen, eine davon zur Energieübertragung, die restlichen Spulen dienen zur Datenübermittlung bzw. zur Synchronisation.

Die räumlichen Abstände beim Programmieren liegen bei wenigen Millimetern. Meistens wird das Detektierplättchen deshalb direkt auf das Programmiergerät gelegt. Die eingesetzte Modulationsart ist meistens FSK, da diese sich einfach mit einer PLL-Schaltung dekodieren läßt.

Um den Schaltungsaufwand zu minimieren, wird beim Stand der Technik der Programmiervorgang durch die Feldfrequenz synchronisiert.

Die bekannten kontaktlosen Programmiertechniken bei Detektierplättchen weisen mehrere Nachteile auf. So ist es erforderlich, mehrere Spulen, beispielsweise zwei oder drei Spulen, für das Empfangen, für die Synchronisation und für das Senden die Energieübertragung zu verwenden. Die Herstellung von preiswerten und vor allem von kleinen Detektierplättchen wird dadurch unmöglich. Gerade die Baugröße ist aber ein entscheidendes Merkmal bei Detektierplättchen für Werkzeugerkennung oder bei Tierimplantaten, wobei eine möglichst geringe Baugröße angestrebt wird.

Der Einsatz von mehr als einer Spule macht es außerdem oft erforderlich, die Spulen in ihrer räumlichen Anordnung in ganz bestimmter Lage richtig zur Schreib/Leseeinheit zu positionieren. Durch diese Einschränkung sind die Systeme mit mehreren Spulen für viele Anwendungen nicht geeignet.

Ein weiterer Nachteil betrifft den Abstand beim Programmieren. Beim Datendekodieren auf der Seite des Detektierplättchens werden analoge Dekodiermethoden wie FSK, PLL-Demodulation mit einem großen Bedarf an Strom eingesetzt. Dadurch wird eine echte Feldprogrammierung, also eine Programmierung über einen größeren Abstand, unmöglich. Der benötigte Strom kann nur über kleinste Distanzen im Millimeter-Bereich übertragen werden. Diese Einschränkung ist vor allem im CIM-Bereich sehr nachteilig, da dort die genaue Positionierung oft nicht möglich ist. Die dort deshalb eingesetzten batteriebehafteten Systeme sind zwar sehr viel teurer, dafür bewegt sich aber der Schreib-Lese-Abstand in einem Bereich zwischen 5 - 10 cm. Es wird angestrebt, solche Abstände auch mit batterielosen Systemen zu realisieren.

Ein weiterer Nachteil betrifft schließlich die Feldsynchronität des Systemtaktes. Die Nutzung der Feldfrequenz, um daraus den Takt für die Datenrate zu erzeugen, ist zwar naheliegend, und man spart einen Oszillator, jedoch ist es dann nicht möglich, das Detektierplättchen über eine AM-Modulation zu programmieren, da das Feld dabei abgeschaltet wird und dann kein Systemtakt mehr vorhanden ist.

Aus der US-PS 3 299 424 ist eine Identifizierungsvorrichtung mit einem Detektierplättchen bekannt, dessen Resonanzkreis im abgestimmten Zustand dem HF-Feld des Senders Energie entzieht und dadurch meßbar auf den HF-Sender rückwirkt.

In der DE 2 748 584 ist eine Identifizierungsvorrichtung beschrieben, welche die Merkmale der voranstehend genannten US-PS 3 299 424 benutzt und diese Merkmale mit den Vorzügen einer Gewinnung der Speisespannung aus dem Resonanzkreis verbindet.

Die Energiegewinnung aus einer Induktionsschleife ist schließlich ebenfalls schon durch die DE-AS 1 219 990 bekannt.

Alle vorstehend genannten drei Druckschriften befassen sich nicht mit der Möglichkeit, den gleichen Resonanzkreis, der für die Energiegewinnung und zum Datensenden benötigt wird, auch zur berührungslosen Programmierung bzw. Änderung der Daten im Detektierplättchen zu verwenden, insbesondere vor dem Hintergrund, daß während des Programmiervorganges nur sehr wenig Energie zum Detektierplättchen gesendet wird und gerade eine herkömmliche Dekodierschaltung (PLL, FSK usw.) sowie das Programmieren des Speichers sehr viel mehr Energie benötigt, als nur das Senden von Daten.

Aus der Druckschrift WO-A-89 050 67 ist ein Transponder bekannt, der zur Identifizierung von Objekten geeignet ist und der sowohl gespeicherte Daten zu einer Basisstation senden kann als auch über die Basisstation programmierbar ist. Der Transponder umfaßt einen mit einer angezapften Spule versehenen Resonanzkreis, der sowohl zur Energieübertragung als auch zum Senden der Daten und zur Programmierung des Transponders dient. Beim Senden wird wenigstens ein Teil der Spule verwendet. Als Modulation beim Senden und Empfangen wird vorzugsweise FSK-Modulation verwendet. Die Decodierung im Transponder erfolgt bei Verwendung dieser Modulation mit Hilfe einer PLL-Schaltung. Ferner umfaßt der Transponder einen Kondensator, der zur Energieversorgung in den Sendepausen herangezogen wird.

Der Erfindung liegt die Aufgabe zugrunde, ein einfaches, platzsparendes und vor allem über große Abstände zu programmierendes Detektierplättchen zu schaffen.

Die Lösung dieser Aufgabe erfolgt bei dem im Oberbegriff des Patentanspruchs 1 genannten Detektierplättchen durch die Merkmale des kennzeichnenden Teiles des Patentanspruchs 1.

Bei der Erfindung wird ein und derselbe Resonanzkreis durch die Modulationseinkopplung von der Schreib/Lese-Vorrichtung so beeinflußt, daß der Dekoder für PPM-codierte Schaltsignale im Detektierplättchen gesteuert wird und somit Daten in den Speicher des Detektierplättchens über Feldmodulation geschrieben werden.

Außerdem kommt bei der Erfindung nur eine Spule für die Feldprogrammierung zum Datensenden und zur Energieversorgung zum Einsatz, so daß das Detektierplättchen sehr klein und preiswert ausgeführt werden kann. Bei der zuvor erwähnten Feldprogrammierung werden erfindungsgemäß Kommandos und Daten durch AM-Modulation gemischt und mit Pulspausenmodulation zum Detektierplättchen übertragen.

Die Form der Datenübertragung und eine erfindungsgemäße rein digital arbeitenden Dekodierschaltung auf dem Detektierplättchen machen zusamen mit einem erfindungsgemäßen Stützkondensator die Feldprogrammierung auch über Abstände von 5 - 10 cm möglich. Das Herz der erfindungsgemäßen Dekodierschaltung sind mehrere Zähler sowie ein Oszillator, der als feldunabhänigige Zeitreferenz dient. Vorteilhafte Weiterbildungen und Ausführungsformen der Erfindung ergeben sich aus den Unteransprüchen.

Anhand des in der Zeichnung dargestellten Ausführungsbeispiels wird die Erfindung nachfolgend näher erläutert:

Es zeigen:
- Fig. 1: Eine schematische Darstellung der Kombination Schreib/Lese-Vorrichtung/Detektierplättchen,
- Fig. 2: das Blockschaltbild eines Detektierplättchens,
- Fig. 3: ein Schaltbild der erfindungsgemäßen Dekodierlogik im Detektierplättchen,
- Fig. 4: ein Datentelegramm vom Detektierplättchen zur Schreib/Lese-Vorrichtung, und
- Fig. 5: Datentelegramme von der Schreib/Lese-Vorrichtung zum Detektierplättchen.

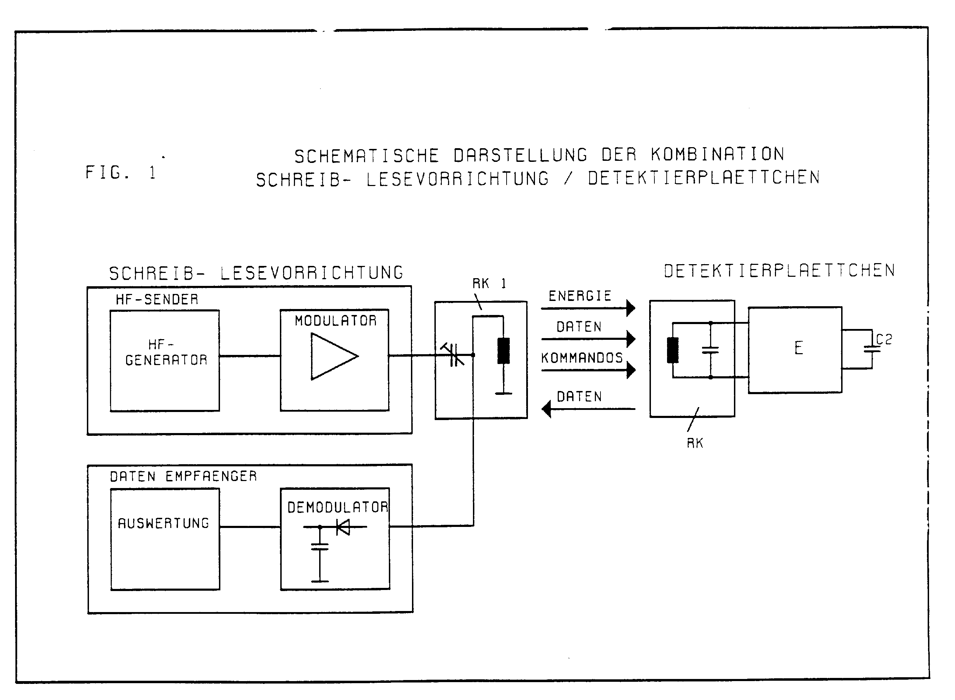

Die in Fig. 1 dargestellte Schreib-Lese-Vorrichtung besteht aus einem HF-Sender mit einem Modulator und einem Datenempfänger mit einem Demodulator. Der HF-Sender generiert eine quarzstabilisierte Frequenz, die in einen Resonanzkreis RK 1 als Antenne geleitet wird, um dort ein HF-Feld aufzubauen. Der Modulator steuert das HF-Feld durch Feldbedämpfung, so daß eine AM-Pulspausenmodulation entsteht, die zur Datenübermittlung zum Detektierplättchen benutzt wird.

Am gleichen Resonanzkreis RK 1 ist auch ein Datenempfänger angeschlossen, der die Feldbedämpfung des Detektierplättchens demoduliert und anschließend auswertet, z. B. um die Nummer des Detektierplättchens zu erkennen.

Über das gleiche HF-Feld werden dabei vier verschiedene Dinge übertragen: Energie, Kommandos und Daten zum Detektierplättchen sowie Daten zur Schreib-Lese-Vorrichtung vom Detektierplättchen.

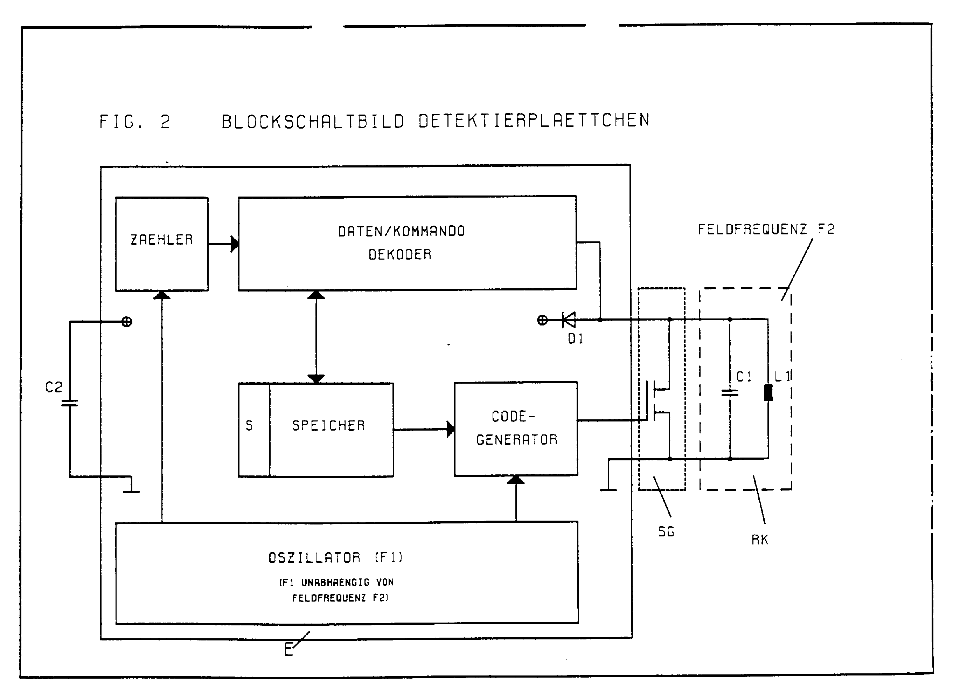

Fig. 2 zeigt ein Detektierplättchen, in welchem sich ein Resonanzkreis RK befindet, bestehend aus einer Spule L 1 und einem Kondensator C 1, dessen Resonanzfrequenz der Frequenz eines in einer Detektierzone herrschenden elektromagnetischen Feldes entspricht.

Wenn das Detektierplättchen in die Detektierzone gebracht wird, wird der Resonanzkreis RK durch das Detektierfeld zum Schwingen angeregt. Dadurch entsteht eine Wechselspannung über dem LC-Kreis, von dem in diesem Beispiel die Spule L 1 und der Kondensator C 1 parallel geschaltet sind.

Die Wechselspannung gelangt über einen Gleichrichter, der hier symbolisch mit D 1 dargestellt ist, zum Chip E. Auf dem Chip E befinden sich ein Oszillator, der den Code-Generator und mit einem Zähler den Dekoder steuert sowie ein Speicher, in dem sich ein Code befindet. Dieser Speicher kommuniziert mit dem Code-Generator und dem Dekoder.

Beim Auslesevorgang, der nach dem Eintauchen des Detektierplättchens in das HF-Feld eingeleitet wird, verarbeitet der Code-Generator die Daten, die im Speicher enthalten sind und sendet diese Daten moduliert an die Schreib-Lesevorrichtung, indem er über ein Schaltglied SG den Schwingkreis RK verstimmt.

Beim Programmiervorgang bewertet der Dekoder zusammen mit Zählern und dem Oszillator die empfangene Modulation von der Schreib-Lese-Vorrichtung und progammiert die Daten in den Speicher. Der Bereich "S" im Speicher läßt sich dabei aus Manipulationsgründen nur einmal programmieren.

Ein Kondensator C 2 wird als Pufferkondensator vorgesehen, um Programmierimpulse für den Speicher auch dann zu ermöglichen, wenn keine konstante Energieversorgung durch das modulierte HF-Feld möglich ist.

Außerdem wird der Kondensator C 2 benötigt, um in den Pulspausen die Funktion des Dekoders mit dem Zähler und dem Oszillator zu gewährleisten und um die Funktion des ganzen Chips aufrechtzuerhalten, da das Feld beim Programmiervorgang zeitweilig abgeschaltet wird.

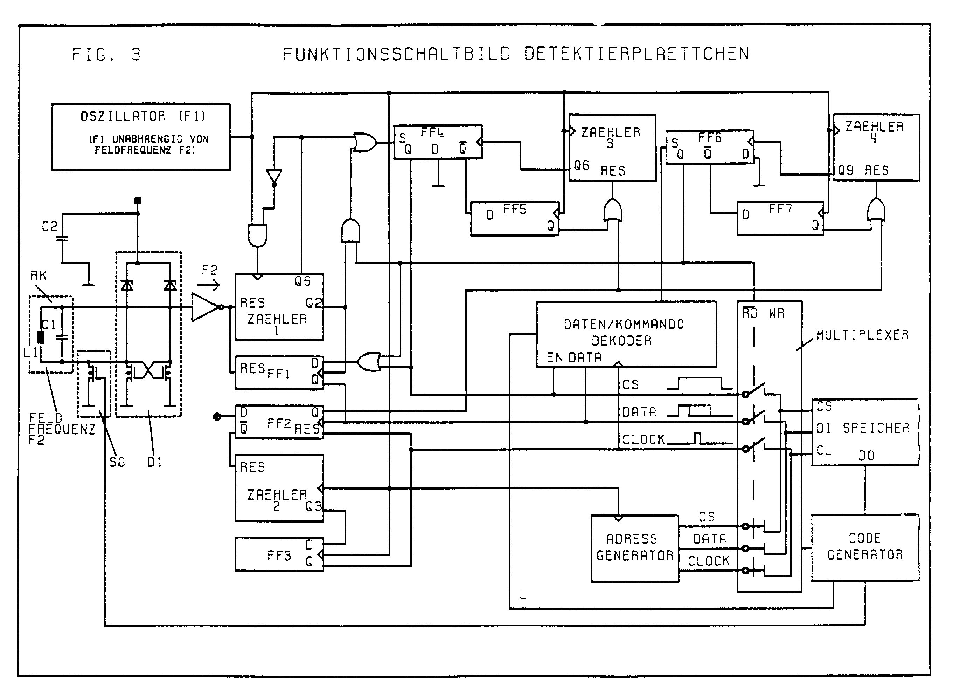

Nachfolgend wird anhand von Fig. 3 eine Funktionsbeschreibung des Detektierplättchens gegeben, wobei zunächst der Funktionsablauf beim Auslesen des Detektierplättchens erläutert wird. Wenn das Detektierplättchen in ein HF-Feld mit der Feldfrequenz F2 gelangt, erfolgt die Energieversorgung mittels des Resonanzkreises RK, des Gleichrichters D 1 und des Stützkondensators C 2. Der Oszillator liefert den feldfrequenzunabhängigen Systemtakt F1. Die anliegende Feldfrequenz F2 hält den Zähler 1 und das Flip-Flop FF1 im Reset-Zustand. Der Adreß-Generator erzeugt mit Hilfe zweier Binärzähler (Zähler 1 und 2) die Datenadressen und bewirkt das Auslesen des Speichers. Ein im Adreß-Generator befindliches Schieberegister übernimmt die Umsetzung der parallelen Daten in einen seriellen Datenstrom.

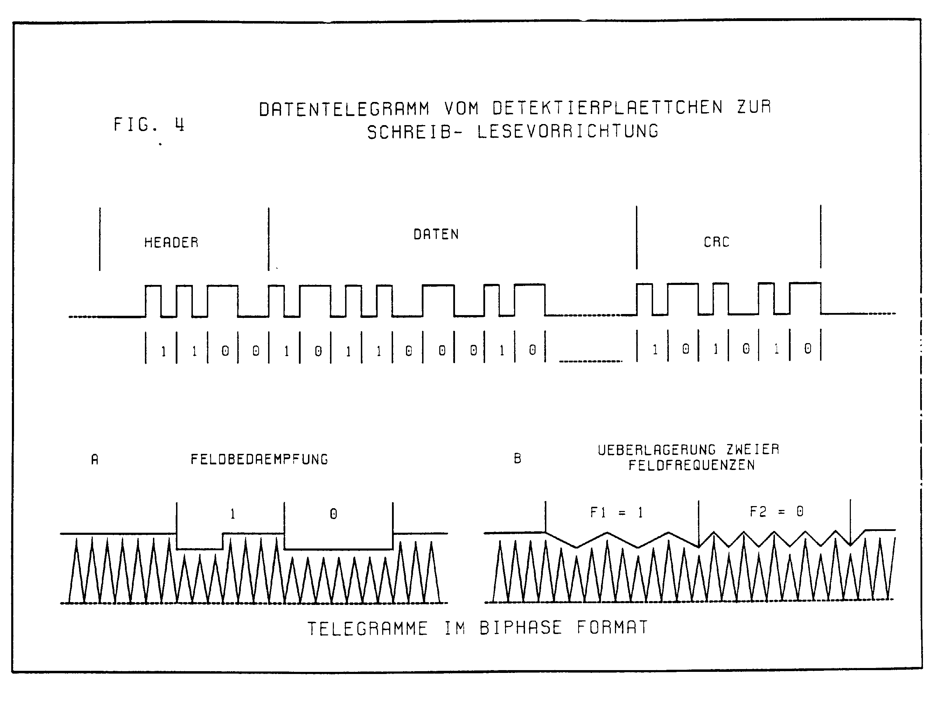

Der Code-Generator hat die Aufgabe, den seriellen Datenstrom in bekannte serielle Datenformate (FSK, BIPHASE) umzusetzen (siehe Fig. 4). Außerdem bewirkt der Code-Generator mit dem Schaltglied SG die Datenübertragung durch eine Feldmodulation.

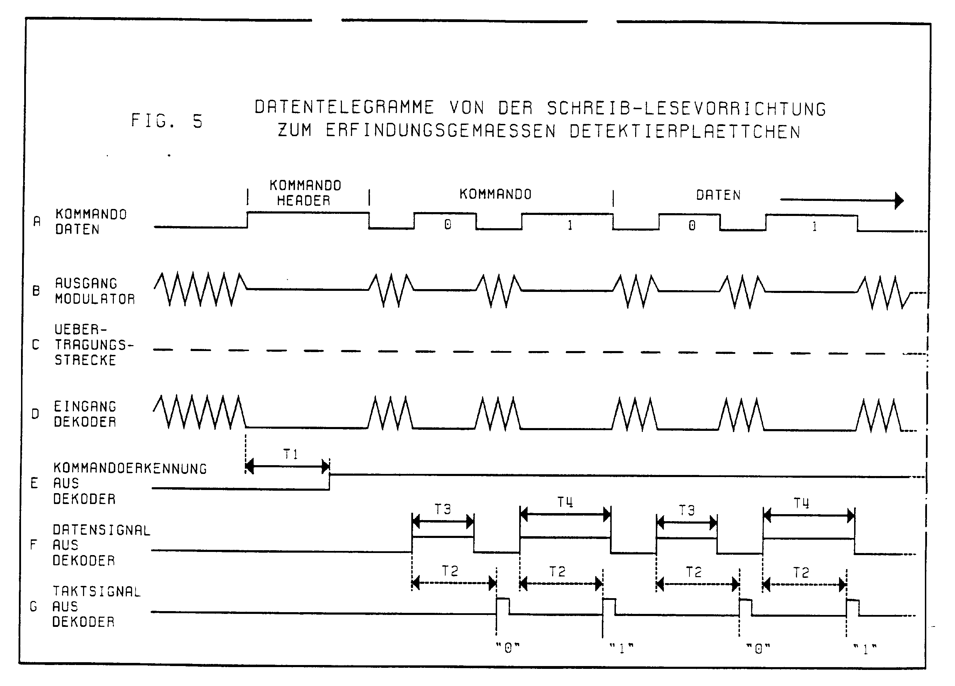

Der Funktionsablauf beim Feldprogrammieren des Detektierplättchens stellt sich wie folgt dar: Grundlage für die Feldprogrammierung des Detektierplättchens sind der Stützkondensator C 2 und der Oszillator, die zusammen dafür sorgen, daß der Systemtakt F1 und die Versorgungsspannung des Detektierplättchens für die AM- und datenbedingten Abschaltzeiten des HF-Feldes erhalten bleibt. Der Programmiervorgang beginnt, wenn das HF-Feld für etwas länger als die Zeit T 1 abgeschaltet wird (vgl. Fig. 5/E).

Da der Zähler 1 nun nicht mehr resetet wird (und der Systemtakt vom Oszillator weiterläuft), geht sein Ausgang Q 6 nach T 1 auf High, setzt das Flip-Flop FF4 und stoppt sich selbst. Das gesetzte Flip-Flop FF4 öffnet nun mit dem CS-Signal den Kommando-Dekoder. Der High-Pegel des Signals liegt auch am D-Eingang des Flip-Flops FF1.

Nach der Zeit T 1 wird das HF-Feld wieder eingeschaltet und der Zähler 1 dadurch resetet. Außerdem wird jetzt natürlich der Kondensator C 2 nachgeladen.

Wird nun das HF-Feld wieder abgeschaltet, setzt der erste High-Pegel des Ausgangs Q 2 vom Zähler 1 das Flip-Flop FF1 (ohne CS-Signal wird das Flip-Flop FF1 nicht gesetzt). Dieser High-Pegel am Ausgang des Flip-Flops FF1 gelangt als DATA-Signal an den Kommando-Dekoder und setzt außerdem das Flip-Flop FF2. Dieses Flip-Flop gibt wiederum die Zähler 2 und 3 frei. Der Zähler 2 erzeugt mit Hilfe des Flip-Flops FF3 nach Ablauf der Zeit T 2 (siehe Fig. 5/G) das CLOCK-Signal für den Kommando-Dekoder. Je nachdem, ob das HF-Feld für die Dauer T 3 bzw. T 4 (siehe Fig. 5/F) ausgeschaltet wird, übernimmt der Kommando-Dekoder mit dem CLOCK-Signal ein DATA-H oder DATA-L (PPM).

Das CLOCK-Signal setzt außerdem das Flip-Flop FF2, den Zähler 2 und das Flip-Flop FF3 zurück. Die ersten Daten, die so übertragen werden, sind Befehle an den Kommando-Dekoder (siehe Fig. 5/A), der das Detektierplättchen auf Grund dieser Befehle in die nachfolgenden vier Zustände versetzt:
1. Speicher programmieren:
   Nach Erkennen des Programmierbefehls setzt der Kommando-Dekoder das Flip-Flop FF6 und gibt mittels des Flip-Flops FF7 des Zähler 4 frei. Außerdem wird mit dem Flip-Flop FF6 ein Multiplexer umgeschaltet, der alle nachfolgend übertragenen Signale CS,DATA und CLOCK an den Speicher leitet. Somit werden die übertragenen Daten in den Speicher geschrieben.
   Jedes übertragene DATA-Signal bewirkt ein Reset für die Zähler 3 und 4, so daß sich die Dauer des CS-Signals (Zähler 3) bzw. der Programmierung (Multiplexer-Umschaltung Zähler 4) verlängert, bis keine weiteren Daten übertragen werden. Das Detektierplättchen geht dann sofort wieder in den Auslesemodus über.
2. Auslesen stoppen:
   Nach dem Erkennen des Stoppbefehls stoppt der Kommando-Dekoder über die Leitung L und über den Code-Generator die Modulation des HF-Feldes. Der Stopp-Befehl ermöglicht es der Schreib-Lese-Vorrichtung, ein Detektierplättchen sofort nach der Erkennung im HF-Feld abzuschalten und auf diese Weise noch weitere in das HF-Feld gelangende Detektierplättchen zu erkennen.
3. Speicher auslesen:
   Der Auslesebefehl ist die Umkehrung des Stopp-Befehls (über die Leitung L wird der Code-Generator freigegeben). Der Auslesebefehl wird übertragen, wenn ein zuvor abgeschaltetes Detektierplättchen reaktiviert werden soll. Je nach Einsatzgebiet des Detektierplättchens sind natürlich noch weitere Befehle möglich.
4. Einstellen der Betriebsart:
   Auf dem Detektierplättchen befindet sich auch ein Betriebsartregister, welches automatisch bei Eintritt des Detektierplättchens in das HF-Feld mit den Datenbits der ersten Speicheradresse geladen wird. Mit diesen Datenbits werden folgende Betriebsarten eingestellt:
   Baudrate, Ein-Phasen-Modulation, Zwei-Phasen-Modulation, feldsynchrone und feldasynchrone Datenübertragung, Binärformat, Biphaseformat, FSK-Format, FSK-Frequenzen, Speichergröße, Read-Write Mode, Read-Only Mode, etc.
   Da der Speicherinhalt durch das HF-Feld geändert (programmiert) werden kann, ist es dadurch möglich, das Detektierplättchen jederzeit von einer Betriebsart auf eine andere Betriebsart umzuprogrammieren.

Fig. 4 zeigt ein Datentelegramm, welches vom Detektierplättchen an die Schreib-Lese-Vorrichtung gesendet wird. Das Telegramm beginnt mit einem Header, der für die Erkennung des Detektierplättchens benötigt wird, gefolgt von den eigentlichen Daten und einem CRC-Check am Ende.

Für den Codeaufbau können verschiedene selbsttaktende Codes gewählt werden wie Biphase, Manchester usw. Die Übertragung der 0 und 1 - Bits kann durch Bedämpfung des Feldes A oder durch Überlagerung zweier Frequenzen B oder durch andere Modulationsarten erfolgen.

In Fig. 5 sind sieben Datentelegramme A-G von der Schreib-Lese-Vorrichtung zum Detektierplättchen dargestellt.

### Datentelegramm A:

Um das Detektierplättchen programmieren zu können, wird zunächst ein Kommando-Header gesendet, gefolgt von einem Kommando-Befehl und den eigentlichen Daten. Einige der möglichen Kommandos sind:
1. Schreiben Daten
2. Lesen Daten
3. Starten Datenübertragung
4. Stoppen Datenübertragung.

### Datentelegramm B:

Der Modulator der Schreib-Lese-Vorrichtung bedämpft dabei das Feld des HF-Generators und erzeugt das Pulspausensignal PPM im Resonanzkreis RK 1.

### Datentelegramm C:

Dieses modulierte HF-Feld wird nun über die Übertragungsstrecke zum Detektierplättchen gesendet.

### Datentelegramm D:

Die von dem Resonanzkreis RK 1 gesendeten Daten führen zu zeitlich proportionalen Daten am Resonanzkreis RK bzw. am Eingang des durch die voranstehend erwähnten Zähler, Flip-Flops usw. gebildeten Dekoders vom Detektierplättchen.

### Datentelegramm E:

Nach der Zeit T 1 liefert der Dekoder das Kommando-Erkennungssignal (CS-Signal).

### Datentelegramme F/G:

Auf Grund der gesendeten PPM-Signale T 3 und T 4 erzeugt der Dekoder nach Kommando-Erkennung mit Hilfe des Zählers T 2 Clock und Daten für das Ausführen der verschiedenen Kommandos. Auf diese Weise werden sowohl Kommandos (wie bei A) als auch Daten vom Schreib-Lese-System zum Detektierplättchen übertragen.

## Patentansprüche

1. Tragbares, feldprogrammierbares Detektierplättchen für eine Identifizierungsvorrichtung mit einer Schreib/Lese-Vorrichtung zum Erfassen der Anwesenheit sowie der berührungslosen Änderung von Daten im Detektierplättchen, mit welchem Personen, Tiere oder Gegenstände versehen sind, die in die Nähe einer Schreib/Lese-Vorrichtung gelangen, wobei die Schreib/Lese-Vorrichtung einen HF-Sender mit Modulator und Datenempfänger umfaßt und das Detektierplättchen einen Signalgeber, Signalempfänger und als Energieempfänger einen auf die Frequenz des HF-Senders abgestimmten Resonanzkreis (RK), ferner einen Speicher, einen Code-Generator und ein mit dem Resonanzkreis gekoppeltes Schaltglied (SG) umfaßt, dem die Schaltsignale vom Code-Generator zugeführt werden, wobei der gleiche Resonanzkreis (RK) einerseits zur Feldprogrammierung des Detektierplättchens und andererseits in an sich bekannter Weise zum Senden der Daten dient und zur Energieversorgung herangezogen wird, und die Feldprogrammierung durch Modulation des verwendeten HF-Trägers erfolgt, wobei damit Daten wie auch Kommandos übertragen werden und wobei ein Kondensator (C2) vorgesehen ist, der mit einer dem Resonanzkreis (RK) entnommenen Spannung geladen ist und zur Energieversorgung des Detektierplättchens dient, dadurch gekennzeichnet, daß mittels des Schaltgliedes (SG) der Resonanzkreis (RK) im Takt der Schaltsignale beim Senden verstimmt wird, daß die Modulation des verwendeten HF-Trägers bei der Feldprogrammierung Puls-Pausen-Modulation (PPM) ist, die in einem mehrere Zähler umfassenden Decoder des Signalempfängers rein digital ausgewertet wird, daß das Detektierplättchen einen Oszillator umfaßt, der als feldunabhängige Zeitreferenz den Zählern des Decoders dient, und daß der Kondensator (C2) so bemessen ist, daß er die Energieversorgung des Detektierplättchens in den Puls-Pausen überbrückt.

2. Tragbares Detektierplättchen nach Anspruch 1, dadurch gekennzeichnet, daß der Speicher einen geschützten Bereich (S) besitzt, der nur einmal beschrieben werden kann.

3. Tragbares Detektierplättchen nach Anspruch 1, dadurch gekennzeichnet, daß durch den eingebauten Oszillator keine Feldsynchronität nötig ist und dadurch die Datenübertragung - auch beim Senden zur Schreib/Lese-Vorrichtung - unabhängig von der HF-Feld-Frequenz wird.

4. Tragbares Detektierplättchen nach Anspruch 1, dadurch gekennzeichnet, daß dessen Schaltung aus maximal vier Bauteilen (L1, C1, E, C2) besteht.

5. Tragbares Detektierplättchen nach Anspruch 1, dadurch gekennzeichnet, daß unterschiedliche Betriebsarten wie Baudrate, Ein-Phasen-Modulation, Zwei-Phasen-Modulation, feldsynchrone und feldasynchrone Datenübertragung, Binärformat, Biphase-Format, FSK-Format, FSK-Frequenzen, Speichergröße, Read-Write Mode, Read-Only Mode, etc; jederzeit durch das HF-Feld frei programmierbar sind.

## Claims

1. Portable, field-programmable detector plate for an identifying device having a read-write apparatus for picking up the presence of and changing without contact the data in the detector plate, with which persons, animals or objects that come into the vicinity of the read-write apparatus are equipped, wherein the read-write apparatus contains an HF transmitter comprising modulator and data receiver, and the detector plate comprises a signal transmitter, signal receiver and, as energy receiver, a resonance circuit (RK) tuned to the frequency of the HF transmitter, furthermore a memory, a code generator and a switching element (SG) coupled to the resonance circuit, to which switching element the switching signals from the code generator are supplied, wherein the same resonance circuit (RK) serves, on the one hand, for the field programming of the detector plate and, on the other hand in known manner, for transmitting the data, and is used for the energy supply, and the field programming takes place by modulation of the HF carrier used, wherein data and also instructions are thereby transmitted and wherein a capacitor (C2) is provided, which is charged with a voltage taken from the resonance circuit (RK) and serves for supplying energy to the detector plate, characterized in that, by means of the switching element (SG), the resonance circuit (RK) is detuned in the cycle of the switching signals during transmission, that the modulation of the HF carrier used in the field programming is pulse-pause modulation (PPM), which is purely digitally evaluated in a decoder of the signal receiver comprising a plurality of counters, that the detector plate comprises an oscillator, which serves as field-independent time reference for the counters of the decoder, and that the capacitor (C2) is so designed that it bridges across the energy supply to the detector plate in the pulse pauses.

2. Portable detector plate according to Claim 1, characterized in that the memory possesses a protected zone (S) which can be written only once.

3. Portable detector plate according to Claim 1, characterized in that, as a result of the incorporated oscillator, no field synchronism is necessary and consequently the data transmission - even during transmission to the read-write apparatus - is independent of the HF field frequency.

4. Portable detector plate according to Claim 1, characterized in that its circuit consists of at most four components (L1, C1, E, C2).

5. Portable detector plate according to Claim 1, characterized in that different operating modes, such as baud rate, single-phase modulation, two-phase modulation, field-synchronous and field-asynchronous data transmission, binary format, biphase format, FSK format, FSK frequencies, memory size, read-write mode, read-only mode, etc. can be freely programmed at any time by the HF field.

## Revendications

1. Plaquette détectrice, programmable par champs, destinée à un dispositif d'identification comportant un dispositif d'écriture/lecture pour détecter la présence ainsi que la modification sans contact de données dans la plaquette détectrice dont sont pourvus des personnes, des animaux ou des objets qui arrivent au voisinage d'un dispositif d'écriture/lecture, le dispositif d'écriture/lecture comprenant un émetteur HF avec modulateur et récepteur de données, et la plaquette détectrice comprenant un transmetteur de signaux, un récepteur de signaux et, comme récepteur d'énergie, un circuit résonnant (RK) accordé sur la fréquence de l'émetteur HF, en outre une mémoire, un générateur de code et un élément de commutation (SG) couplé au circuit résonnant auquel sont envoyés les signaux de commutation du générateur de code, le même circuit résonnant (RK) servant, d'une part, à la programmation de champs de la plaquette détectrice et, d'autre part, d'une manière connue en soi, à l'envoi des données et étant utilisé pour l'alimentation en énergie, et la programmation de champs résultant de la modulation de la porteuse HF utilisée, par là des données comme des commandes étant transmises, et étant prévu un condensateur (C2) qui est chargé par une tension prise sur le circuit résonnant (RK) et qui sert à l'alimentation en énergie de la plaquette détectrice, caractérisée en ce qu'au moyen de l'élément de commutation (SG), le circuit résonnant (RK) est désaccordé à la cadence du signal de commutation par l'envoi, en ce que la modulation de la porteuse HF utilisée est dans la programmation de champs une modulation par impulsions (PPM) qui est exploitée. purement numériquement dans un décodeur à plusieurs compteurs du récepteur de signaux, en ce que la plaquette détectrice comprend un oscillateur qui sert de référence de temps indépendante du champ aux compteurs du décodeur, et en ce que le condensateur (C2) a une valeur telle qu'il assure l'alimentation en énergie de la plaquette détectrice dans les pauses entre impulsions.

2. Plaquette détectrice portable suivant la revendication 1, caractérisée en ce que la mémoire comprend une zone protégée (S) que l'on ne peut enregistrer qu'une fois.

3. Plaquette détectrice portable suivant la revendication 1, caractérisée en ce que, par l'oscillateur incorporé, aucune synchronisation de champ n'est nécessaire, et donc la transmission de données - aussi en envoi vers le dispositif d'écriture/lecture - est indépendante de la fréquence de champ HF.

4. Plaquette détectrice portable suivant la revendication 1, caractérisée en ce que son montage se compose au maximum de quatre composants (L1, C1, E, C2).

5. Plaquette détectrice portable suivant la revendication 1, caractérisée en ce que différentes formes de service, comme la vitesse en baud, la modulation monophasée, la modulation biphasée, la transmission de données à champs synchrones et asynchrones, le format binaire, le format biphase, le format FSK, les fréquences FSK, les capacités de mémoire, le mode lecture-écriture, le mode uniquement lecture, etc., sont programmables à volonté, à chaque fois, par le champ HF.
